# EUROPEAN PATENT APPLICATION

(11) **EP 4 787 787 A1**
(43) Date of publication of application: **05.08.2026**
(21) Application number: 23953720.2
(22) Date of filing: 28.09.2023
(51) Int. Cl.: H04L 25/02

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: LI, Dexin, Dongguan, Guangdong 523860 (CN); TIAN, Wenqiang, Dongguan, Guangdong 523860 (CN)
(74) Representative: RGTH
(86) International application number: PCT/CN2023/122755
(87) International publication number: WO 2025/065573

(57) **Abstract**

Provided are a wireless communication method and a communication device. The method comprises: a first device sending first information to a second device, wherein the first information comprises one or more of the following: second information, which is used for indicating a suggested first pilot frequency configuration; and third information, which is used for indicating full channel information of a channel, the full channel information of the channel being used for determining a first pilot frequency configuration. In the embodiments of the present application, a first device can send, to a second device, first information used for determining a first pilot frequency configuration, wherein the first information can be used for indicating a suggested first pilot frequency configuration and/or used for indicating full channel information of a channel. Compared with conventional solutions for determining a pilot frequency configuration on the basis of partial channel information, the present application helps to improve the rationality of a selected first pilot frequency configuration, thereby improving the degree of matching between the first pilot frequency configuration and a current channel characteristic, and further improving the performance of channel estimation.

## Description

### TECHNICAL FIELD

This application relates to the field of communications technologies, and more specifically, to a wireless communication method and a communications device.

### BACKGROUND

Currently, a transmitting device may transmit a pilot signal to a receiving device. Correspondingly, the receiving device may obtain, by measuring the pilot signal, channel information of a channel over which the pilot signal is transmitted. Thereafter, the receiving device may transmit partial channel information in the channel information to the transmitting device. Thereafter, the transmitting device may select an appropriate pilot configuration for the receiving device based on the partial channel information. However, such a method for selecting a pilot configuration based on the partial channel information may result in an inappropriate pilot configuration being selected, thereby affecting quality of communication between the transmitting device and the receiving device.

### SUMMARY

This application provides a wireless communication method and a communications device. The following describes the aspects related to this application.

According to a first aspect, a wireless communication method is provided, and includes: transmitting, by a first device, first information to a second device, where the first information includes one or more of the following: second information, where the second information is used to indicate a recommended first pilot configuration; or third information, where the third information is used to indicate full channel information of a channel, and the full channel information of the channel is used to determine the first pilot configuration.

According to a second aspect, a wireless communication method is provided, and includes: receiving, by a second device, first information transmitted by a first device, where the first information includes one or more of the following: second information, where the second information is used to indicate a recommended first pilot configuration; or third information, where the third information is used to indicate full channel information of a channel, and the full channel information of the channel is used to determine the first pilot configuration.

According to a third aspect, a communications device is provided. The communications device is a first device, and includes: a transmitting unit, configured to transmit first information to a second device, where the first information includes one or more of the following: second information, where the second information is used to indicate a recommended first pilot configuration; or third information, where the third information is used to indicate full channel information of a channel, and the full channel information of the channel is used to determine the first pilot configuration.

According to a fourth aspect, a communications device is provided. The communications device is a second device, and includes: a receiving unit, configured to receive first information transmitted by a first device, where the first information includes one or more of the following: second information, where the second information is used to indicate a recommended first pilot configuration; or third information, where the third information is used to indicate full channel information of a channel, and the full channel information of the channel is used to determine the first pilot configuration.

According to a fifth aspect, a communications device is provided, including a processor, a memory, and a communications interface. The memory is configured to store one or more computer programs, and the processor is configured to invoke the computer program in the memory, to cause the communications device to execute some or all of the steps in the methods according to the foregoing aspects.

According to a sixth aspect, an embodiment of this application provides a communications system, where the system includes the foregoing terminal device and/or the foregoing network device. In another possible design, the system may further include another device that interacts with the terminal device or the network device in the solutions provided in embodiments of this application.

According to a seventh aspect, an embodiment of this application provides a computer-readable storage medium, where the computer-readable storage medium stores a computer program, and the computer program causes a communications device (for example, a terminal device or a network device) to execute some or all of steps in a method according to each of the foregoing aspects.

According to an eighth aspect, an embodiment of this application provides a computer program product. The computer program product includes a non-transitory computer-readable storage medium that stores a computer program. The computer program is operable to cause a communications device (for example, a terminal device or a network device) to perform some or all of the steps of the method in each of the foregoing aspects. In some implementations, the computer program product may be a software installation package.

According to a ninth aspect, an embodiment of this application provides a chip. The chip includes a memory and a processor. The processor may invoke a computer program from the memory and run the computer program, to implement some or all of the steps described in the method according to the foregoing aspects.

In embodiments of this application, a first device may transmit, to a second device, first information used for determining a first pilot configuration, where the first information may include information used for indicating a recommended first pilot configuration and/or information used for indicating full channel information of a channel. Compared with a conventional scheme for determining a pilot configuration based on partial channel information, this application helps improve properness of the selected first pilot configuration, thereby increasing a degree of matching between the first pilot configuration and current channel characteristics, and further improving channel estimation performance.

### BRIEF DESCRIPTION OF DRAWINGS

FIG. 1 shows a wireless communications system 100 to which embodiments of this application are applied.
FIG. 2 is a schematic diagram of a neural network to which embodiments of this application are applicable.
FIG. 3 is a schematic diagram of a convolutional neural network (convolutional neural network, CNN) to which embodiments of this application are applicable.
FIG. 4 is a schematic diagram of channel estimation and signal recovery to which embodiments of this application are applicable.
FIG. 5(a) to FIG. 5(f) are schematic diagrams of resources occupied by pilot signals to which embodiments of this application are applicable.
FIG. 6 is a schematic diagram of a correspondence established between channel features and a pilot configuration based on a model, to which embodiments of this application are applicable.
FIG. 7 is a schematic flowchart of a wireless communication method according to an embodiment of this application.
FIG. 8 is a schematic flowchart of a wireless communication method according to another embodiment of this application.
FIG. 9 is a schematic flowchart of a wireless communication method according to another embodiment of this application.
FIG. 10 is a schematic diagram of feature data of full channel information determined based on a second model, according to an embodiment of this application.
FIG. 11 is a schematic flowchart of a wireless communication method according to another embodiment of this application.
FIG. 12 is a schematic flowchart of a wireless communication method according to another embodiment of this application.
FIG. 13 is a schematic flowchart of a wireless communication method according to another embodiment of this application.
FIG. 14 is a schematic diagram of a communications device according to an embodiment of this application.
FIG. 15 is a schematic diagram of a communications device according to another embodiment of this application.
FIG. 16 is a schematic diagram of a structure of a communications apparatus according to an embodiment of this application.

### DESCRIPTION OF EMBODIMENTS

Technical solutions in this application are described below with reference to the accompanying drawings.

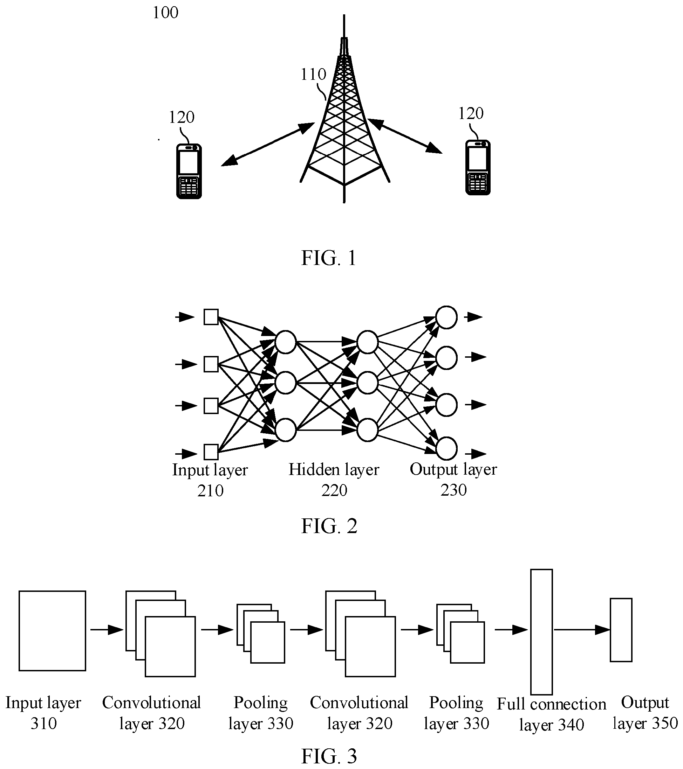

FIG. 1 shows a wireless communications system 100 to which embodiments of this application are applied. The wireless communications system 100 may include a network device 110 and a terminal device 120. The network device 110 may be a device that communicates with the terminal device 120. The network device 110 may provide communication coverage for a specific geographic area, and may communicate with a terminal device 120 within the coverage area.

FIG. 1 exemplarily shows one network device and two terminals. Optionally, the wireless communications system 100 may include a plurality of network devices, and another quantity of terminal devices may be included in coverage of each network device, which is not limited in embodiments of this application.

Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system or new radio (new radio, NR), a long-term evolution (long term evolution, LTE) system, an LTE frequency division duplex (frequency division duplex, FDD) system, or an LTE time division duplex (time division duplex, TDD) system. The technical solutions provided in this application may further be applied to a future communications system, such as a 6th generation mobile communications system or a satellite communications system.

The terminal device in embodiments of this application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides a sidelink signal between UEs in V2X, D2D, or the like. For example, a cellular phone and a vehicle communicate with each other through a sidelink signal. A cellular phone and a smart home device communicate with each other, without relaying a communication signal through a base station.

The network device in embodiments of this application may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover devices having the following various names, or may be replaced with the devices having the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNodeB MeNB, a secondary eNodeB SeNB, a multi-standard radio (MSR) node, a home base station, a network controller, an access node, a radio node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communications, a network-side device in a 6G network, a device that functions as a base station in a future communications system, or the like. The base station may support networks of a same access technology or different access technologies. A specific technology and a specific device used by the network device are not limited in embodiments of this application.

The base station may be stationary or mobile. For example, a helicopter or an unmanned aerial vehicle may be configured to function as a mobile base station, and one or more cells may move according to a location of the mobile base station. In another example, a helicopter or an unmanned aerial vehicle may be configured to serve as a device in communication with another base station.

In some deployments, the network device in embodiments of this application may be a CU or a DU, or the network device may include a CU and a DU. The gNB may further include an AAU.

The network device and the terminal device may be deployed on land, including being deployed indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

It should be understood that all or some of functions of the communications device in this application may alternatively be implemented by software functions running on hardware, or by virtualization functions instantiated on a platform (for example, a cloud platform).

With the development of artificial intelligence (artificial intelligence, AI) technologies, AI models have been introduced into an increasing quantity of communication processes. For ease of understanding, the following first describes, with reference to FIG. 2 and FIG. 3, an AI model to which embodiments of this application are applicable.

### Artificial intelligence (artificial intelligence, AI) model

In recent years, artificial intelligence research represented by a neural network has made great achievements in many fields, and will also play an important role in people's production and life for a long time to come. The neural network may be understood as a computational model consisting of a plurality of neuron nodes connected to each other, where a connection between nodes may represent a weighted value from an input signal to an output signal, typically referred to as a weight. Each node performs weighted summation on different input signals and outputs the signals by using a specific activation function.

Common neural networks include a CNN, a recurrent neural network (recurrent neural network, RNN), a deep neural network (deep neural network, DNN), and the like.

With reference to FIG. 2, the following describes a neural network to which embodiments of this application are applicable. Layers of the neural network shown in FIG. 2 may be classified into three types according to locations of different layers: an input layer 210, a hidden layer 220, and an output layer 230. Generally, the first layer is the input layer 210, the last layer is the output layer 230, and the middle layers between the first layer and the last layer are the hidden layers 220.

The input layer 210 is configured to input data. The input data may be, for example, a received signal received by a receiver. The hidden layer 220 is configured to process the input data, for example, perform decompression processing on a received signal. The output layer 230 is configured to output processed output data, for example, output a decompressed signal.

As shown in FIG. 2, the neural network includes a plurality of layers, and each layer includes a plurality of neurons. Neurons between the layers may be fully connected, or may be partially connected. For connected neurons, output of neurons of an upper layer may be used as input of neurons of a lower layer.

With continuous development of neural network research, neural network deep learning algorithms are proposed in recent years. A relatively large quantity of hidden layers are introduced into a neural network to form a DNN. More hidden layers enable the DNN to better describe a complex situation in a real world. In theory, a model with a larger quantity of parameters has higher complexity and also a larger capacity, which means that the model can complete a more complex learning task. This neural network model is widely applied in aspects such as pattern recognition, signal processing, optimization combination, and anomaly detection.

A CNN is a deep neural network with a convolutional structure. As shown in FIG. 3, the structure of the CNN may include an input layer 310, convolutional layers 320, pooling layers 330, a full connection layer 340, and an output layer 350.

Each convolutional layer 320 may include a plurality of convolutional operators, and a convolutional operator is also referred to as a kernel. A function of the convolutional operator may be considered as a filter for extracting specific information from an input signal. The convolutional operator may essentially be a weight matrix, and the weight matrix is generally pre-defined.

Weight values in these weight matrices are obtained through a large amount of training in actual application. Each weight matrix formed by the weight values obtained through training may extract information from an input signal, to assist the CNN in performing correct prediction.

When the CNN has a plurality of convolutional layers, an initial convolutional layer usually extracts more general features, and the general features may also be referred to as lowerlevel features. As a depth of the CNN increases, features extracted by subsequent convolutional layers are increasingly complex.

For the pooling layers 330, as a quantity of training parameters is often required to be reduced, a pooling layer is often required to be periodically introduced behind the convolutional layer. For example, as shown in FIG. 3, one pooling layer may follow one convolutional layer, or one or more pooling layers may follow a plurality of convolutional layers. In a signal processing process, the only purpose of the pooling layer is to reduce a size of space occupied by extracted information.

For the full connection layer 340, the CNN still cannot output required output information after the processing at the convolutional layers 320 and the pooling layers 330. As mentioned above, the convolutional layers 320 and the pooling layers 330 only extract features and reduce a quantity of parameters brought by the input data. To generate the final output information (for example, a bitstream of original information transmitted by a transmit end), the CNN is required to use the full connection layer 340. Generally, the full connection layer 340 may include a plurality of hidden layers. Parameters included in the plurality of hidden layers may be obtained by performing pre-training according to related training data of a specific task type. For example, the task type may include decoding a data signal received by a receiver, and for another example, the task type may alternatively include performing channel estimation based on a pilot signal received by the receiver.

A layer behind the plurality of hidden layers in the full connection layer 340, that is, the last layer of the entire CNN, is the output layer 350, which is configured to output a result. Generally, a loss function (for example, a loss function similar to a classification cross entropy) is set for the output layer 350, to calculate a prediction error, or in other words, to evaluate a degree of difference between the result (also referred to as a predicted value) output by the CNN model and an ideal result (also referred to as a true value).

To minimize the loss function, the CNN model is required to be trained. In some implementations, the CNN model may be trained by using a backpropagation algorithm (backpropagation algorithm, BP). A training process of the BP includes a forward propagation process and a backward propagation process. In the process of forward propagation (as shown in FIG. 3, propagation from 310 to 350 is forward propagation), the input data is input into the foregoing layers of the CNN model, processed layer by layer, and transmitted to the output layer. If a difference between the result output at the output layer and the ideal result is relatively large, the training process is switched from forward propagation to backward propagation (as shown in FIG. 3, propagation from 350 to 310 is backward propagation) with an optimization objective of minimizing the foregoing loss function. A partial derivative of each neuron weight value with respect to the optimization objective is obtained layer by layer, to constitute a gradient of a weight value vector with respect to the optimization objective, which is used as a basis for modifying a model weight. Then, the training process of the CNN is implemented by the weight modification process. When the foregoing error reaches an expected value, the training process of the CNN ends.

It should be noted that the CNN shown in FIG. 3 is merely an example of a convolutional neural network. In a specific application, the convolutional neural network may also be in another form of network model, which is not limited in embodiments of this application.

An objective of RNNs is to process sequence data. In a conventional neural network model (for example, the CNN model), from an input layer to hidden layers and then to an output layer, different types of layers are fully connected, but nodes within the same layer are not connected. However, such a common neural network is unable to solve many problems. For example, to predict a next word in a sentence, words before this word are generally used because words in a sentence are not independent of each other. A reason why the RNNs are named recurrent neural networks is that current output of a sequence is also related to previous output, which is specifically characterized in that the network memorizes previous information and applies the information to calculations of current output, that is, nodes between hidden layers are no longer connectionless but connected, and input of a hidden layer includes not only output of the input layer but also output of the hidden layer at a previous instant. Theoretically, the RNNs can process sequence data of any length.

Training for the RNN is similar to that for a conventional ANN (artificial neural network). They both use the BP error backpropagation algorithm, but have one difference, which lies in that, if RNNs are unfolded, parameters W, U, and V are shared, but this is not the case in a conventional neural network. In addition, in a gradient descent algorithm, output of each step depends on not only a network of a current step, but also a status of the network in previous several steps. For example, when t = 4, the training process is transferred backward by three steps, and various gradients in the backward three steps need to be added. This learning algorithm is referred to as backpropagation through time (back propagation through time, BPTT).

Since an artificial neural network and a convolutional neural network already exist, why is a recurrent neural network required? The reason is quite simple. Prerequisite assumptions of the convolutional neural network and the artificial neural network are both: elements are independent of each other, and input and output are also independent of each other, for example, a cat and a dog. However, in the real world, many elements are connected. For example, stocks change with time. One person says, "I like to travel. Yunnan is my favorite place, and I will go to __ if I have time." Everyone should know that "Yunnan" needs to be filled in the blank here, because this can be inferred from the context. However, it is difficult for a machine to do so. Consequently, a current recurrent neural network emerges. An essence of the recurrent neural network is having an ability to remember like a human being. Therefore, output of the recurrent neural network depends on current input and memory.

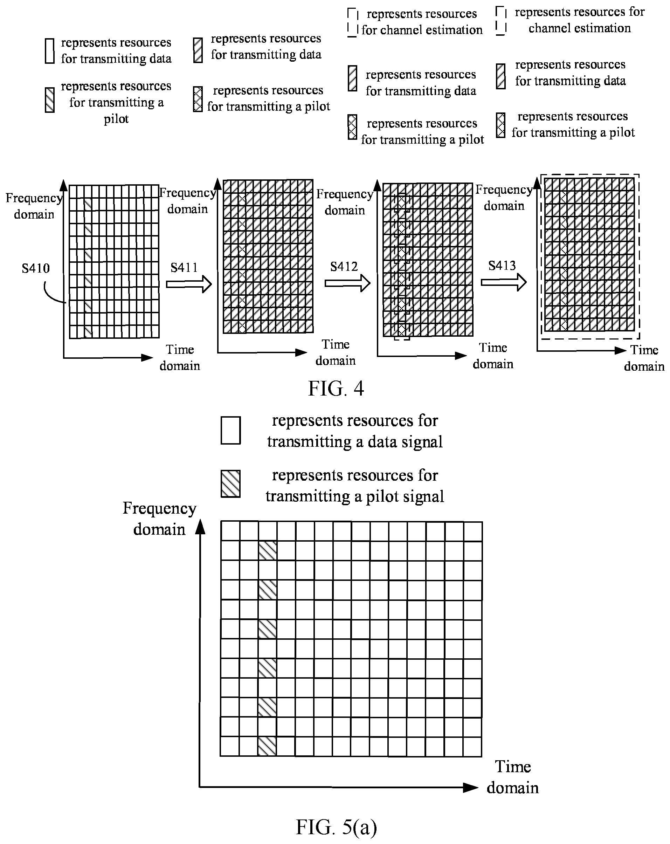

The AI model to which embodiments of this application are applicable is described above with reference to FIG. 2 and FIG. 3. A communication process to which embodiments of this application are applicable is described below with reference to FIG. 4.

### Channel estimation and signal recovery based on an AI model

Due to complexity and a time-varying characteristic of a wireless channel environment, in a wireless communications system (for example, the wireless communications system described above), a receiver is required to recover a received signal based on a channel estimation result. FIG. 4 is a schematic diagram of channel estimation and signal recovery to which embodiments of this application are applicable.

As shown in FIG. 4, in step S410, in addition to transmitting a data signal on time-frequency resources, a transmitter also transmits a series of pilot signals known to the receiver. The pilot signals being known may include one or more of the following cases: a frequency-domain position where the pilot signals are transmitted is known; a time-domain position where the pilot signals are transmitted is known; content of the transmitted pilot signals is known; or power used for transmitting the pilot signals is known.

In step S411, the transmitter transmits the data signal and the pilot signals to the transmitter by using a channel.

In step S412, after receiving the pilot signals, the receiver may perform channel estimation. In a possible implementation, the receiver may estimate, based on a pre-stored pilot sequence and a received pilot sequence by using a channel estimation algorithm (for example, least squares (least squares method, LS) channel estimation), channel information of the channel over which the pilot signals are transmitted.

In step S413, the receiver may recover, based on the channel information of the channel over which the pilot sequence is transmitted, channel information on full time-frequency resources by using an interpolation algorithm, and the recovered channel information may be used for subsequent channel state information (channel state information, CSI) feedback or data recovery.

### Pilot (pilot) signal

In some scenarios, a pilot signal may also be referred to as a "reference signal (reference signal, RS)". From a perspective of a transmission direction of a reference signal, the reference signal may include an uplink reference signal and a downlink reference signal. From a perspective of a type of a reference signal, the reference signal may include a channel state information-reference signal (channel state information-reference signal, CSI-RS), a demodulation reference signal (demodulation reference signal, DMRS), a phase-tracking reference signal (phase-tracking reference signals, PT-RS), a sounding reference signal (sounding reference signal, SRS), and a cell-specific reference signal (cell-specific reference signals, CRS).

In some scenarios, a reference signal may be transmitted based on a reference signal configuration. The following describes a reference signal configuration by using a DMRS as an example. The DMRS is used for channel estimation and related demodulation of a physical channel. Generally, DMRSs may be mapped to physical channels such as a physical broadcast channel (physical broadcast channel, PBCH), a physical downlink control channel (physical downlink control channel, PDCCH), a physical downlink shared channel (physical downlink shared channel, PDSCH), a physical uplink control channel (physical uplink control channel, PUCCH), and a physical downlink shared channel (physical uplink shared channel, PUSCH). However, RS configurations used for DMRSs mapped to different physical channels may differ slightly. It is assumed that a DMRS is mapped to a PDSCH. In this case, the DMRS in the PDSCH is typically a reference signal dedicated to a terminal device, and an RS configuration for the DMRS may include: a mapping type (mapping type), a DMRS type, and an additional position (additional position). For functions of the three reference signal configurations, reference may be made to Table 1. It should be understood that, in embodiments of this application, since an RS may also be referred to as a "pilot signal", correspondingly, an RS configuration may also be referred to as a "pilot signal configuration" or a "pilot configuration".

**Table 1**

| **RS configuration** | **Function** |
|---|---|
| Mapping type | The mapping type is used to determine a starting symbol position of a DMRS in time domain. |
| DMRS type | The DMRS type, sometimes also referred to as a DMRS configuration type, is used to determine RE mapping density of the DMRS in frequency domain, to adapt to different channel conditions and transmission requirements. |
| Additional position | May be used in medium- and high-mobility scenarios, where more DMRS pilot symbols are inserted within a scheduled slot to improve estimation accuracy of a time-varying channel. Generally, a maximum of three additional positions may be configured within one slot. |

Currently, to meet deployment requirements of different communication scenarios, a plurality of pilot patterns may be obtained by configuring different reference signal configurations as described above. For example, in different pilot patterns, the pilot signals may correspond to different positional distributions. For another example, in different pilot patterns, the pilot signals may correspond to different time-domain densities. For another example, in different pilot patterns, the pilot signals may correspond to different frequency densities. For ease of understanding, the following describes several pilot patterns with reference to FIG. 5(a) to FIG. 5(f). It is assumed that indexes of symbols in a resource block (resource block, RB) in each of FIG. 5(a) to FIG. 5(f) increase in order of time-domain positions from the earliest to the latest, and indexes of subcarriers in the RB increase in order of frequency-domain positions from the lowest to the highest. In addition, the indexes of the symbols and the indexes of the subcarriers are numbered starting from 0.

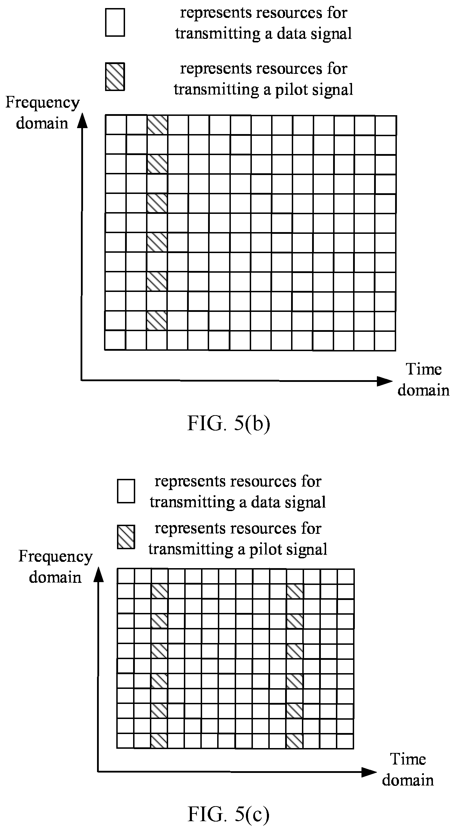

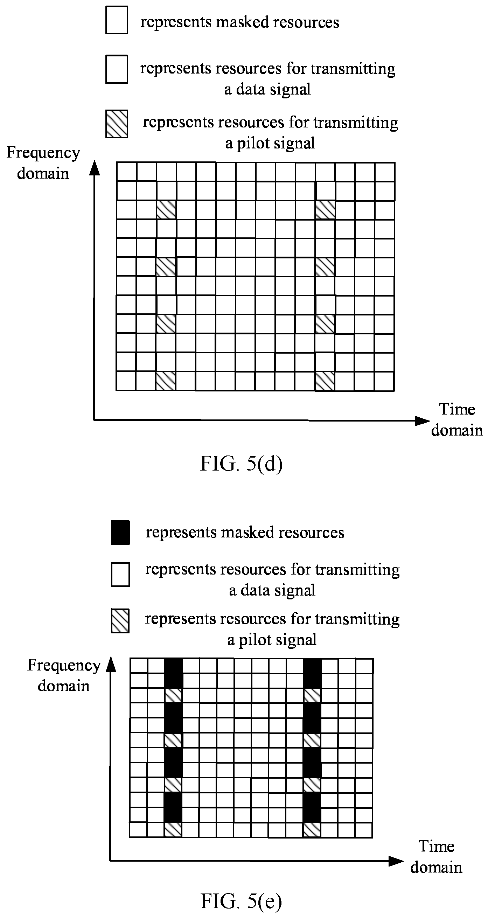

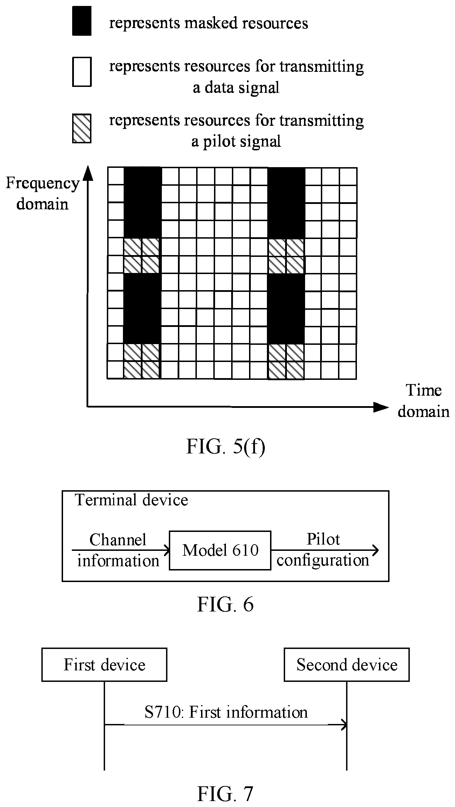

Referring to FIG. 5(a), within one RB, a plurality of resource elements (resource element, RE), corresponding to a symbol 2 in the RB, occupied by the pilot signals are distributed at an interval of one subcarrier, and an index of a subcarrier corresponding to an RE with the lowest frequency position occupied by the pilots in the symbol 2 is 0. Referring to FIG. 5 (b), within one RB, a plurality of REs, corresponding to a symbol 2 in the RB, occupied by the signals are distributed at an interval of one subcarrier, and an index of a subcarrier corresponding to an RE with the lowest frequency position occupied by the pilots in the symbol 2 is 1. Referring to FIG. 5 (c), within one RB, REs occupied by the signals are located within a symbol 2 and a symbol 11 in the RB, and a plurality of REs, corresponding to the symbol 2 and the symbol 11, occupied by the pilot signals are distributed at an interval of one subcarrier. Referring to FIG. 5 (d), within one RB, REs occupied by the pilot signals are a plurality of groups of REs within a symbol 2 in the RB, where each group of REs includes two REs consecutive in frequency domain, and an RE occupied by the pilot signals in each group of REs is an RE with a lower frequency position. Referring to FIG. 5 (e), within one RB, REs occupied by the pilot signals are located within a symbol 2 and a symbol 11 in the RB, and the plurality of REs occupied by the pilot signals are distributed at an interval of a plurality of subcarriers (for example, three subcarriers) in frequency domain. Referring to FIG. 5 (f), within one RB, REs occupied by the pilot signals are located within a symbol 2 and a symbol 3 in the RB, the REs occupied by the pilot signals are a plurality of groups of REs, and the plurality of groups of REs are distributed at an interval of four subcarries in frequency domain. In addition, in each group of REs, REs occupied by the pilot signals span two consecutive subcarriers in frequency domain.

Generally, in the patterns shown in FIG. 5 (a) to FIG. 5 (f), different patterns may be adapted to different communication environments. In some implementations, when a terminal device moves at a relatively high speed and channel characteristics change rapidly over time, a pattern with a relatively dense distribution of pilot symbols may be selected, which helps improve accuracy of channel quality estimation for the entire RB. For example, the pattern shown in FIG. 5 (b) may be selected.

In some other implementations, when a terminal device moves at a relatively low speed and channel characteristics change slowly over time, a pattern with a relatively sparse distribution of pilot symbols may be selected, which helps reduce overheads caused by transmitting the pilot signals while ensuring the accuracy of channel quality estimation for the entire RB.

### Model-based pilot design

In view of the development of AI technologies and/or machine learning (machine learning, ML) technologies, attempts have been made in the communication field to use AI models and/or ML models to solve technical problems that are difficult to address by using conventional communication methods. In particular, as deep learning has achieved great success in computer vision, natural language processing, and other aspects, deep learning has begun to be used in the communications field to solve technical problems that are difficult to solve by using conventional communication methods. Generally, a commonly used neural network architecture in deep learning is nonlinear and data-driven. Therefore, a deep learning-based model may perform feature extraction on channel matrix data, and establish a correspondence between channel features and a best pilot configuration by using a channel estimation result as supervision.

FIG. 6 illustrates a scheme for establishing a correspondence between channel features and a pilot configuration based on a model. Referring to FIG. 6, the model 610 may be deployed in a terminal device. Correspondingly, the terminal device may obtain channel information through channel estimation, and perform feature extraction on the channel information by using the model 610, to obtain a matched pilot configuration. A model structure (for example, AI Model) of the model 610 may be flexibly designed, which is not limited in embodiments of this application.

As described above, a transmitting device may transmit a pilot signal to a receiving device. Correspondingly, the receiving device may obtain, by measuring the pilot signal, channel information of a channel over which the pilot signal is transmitted. Thereafter, the receiving device may transmit partial channel information in the channel information to the transmitting device. Accordingly, the transmitting device may select an appropriate pilot configuration for the receiving device based on the partial channel information. However, such a method for selecting a pilot configuration based on the partial channel information may result in an inappropriate pilot configuration being selected, thereby affecting quality of communication between the transmitting device and the receiving device.

In a conventional pilot configuration scheme, a transmitting device may select a pilot configuration based on partial channel information, because a quantity of pilot configurations specified in a protocol is very limited, for example, including the several pilot configurations described above with reference to FIG. 5(a) to FIG. 5(f). Therefore, an appropriate pilot configuration may be selected from the limited quantity of selectable pilot configurations based on the partial channel information. However, with the development of technologies, when selectable pilot configurations are not limited to the several conventional pilot configurations, the scheme for selecting an appropriate pilot configuration based on partial channel information may fail to meet communication requirements of a communications system. For example, after a model-based pilot configuration is introduced into a communications system, selectable pilot configurations may no longer be limited to the several pilot configurations predefined in the protocol. In this case, if partial channel information is still input into the model, an inappropriate pilot configuration may be output by the model, thereby affecting quality of communication between a transmitting device and a receiving device.

Therefore, in view of the foregoing problem, an embodiment of this application provides a wireless communication method. In this method, a first device may transmit, to a second device, first information used for determining a first pilot configuration. Compared with a conventional scheme for determining a pilot configuration based on partial channel information, the method helps improve properness of the selected first pilot configuration, thereby increasing a degree of matching between the first pilot configuration and current channel characteristics, and further improving channel estimation performance.

In embodiments of this application, at least one of the first device or the second device is not limited. In some implementations, the first device may be a device that transmits pilot signals, and the second device may be a device that receives pilot signals. A transmission scenario of downlink pilot signals is used as an example. In this case, the first device may be a network device, and the second device may be a terminal device. A transmission scenario of uplink pilot signals is used as an example. In this case, the first device may be a terminal device, and the second device may be a network device. A transmission scenario of sidelink pilot signals is used as an example. In this case, the first device may be a terminal device, and the second device may be a terminal device.

In embodiments of this application, a manner of transmitting the first information is not limited. In some implementations, the first information may be transmitted periodically. In some other implementations, the first information may be transmitted semi-persistently. In some other implementations, the first information may be transmitted non-periodically.

With reference to FIG. 7, the following describes a wireless communication method according to an embodiment of this application. The method shown in FIG. 7 includes step S710. In step S710, a first device transmits first information to a second device. In some implementations, the first information may include second information and/or third information.

For example, the first information includes the second information. In this case, the second information is used to indicate a recommended first pilot configuration, or in other words, the second information is used to indicate a first pilot configuration recommended by the first device. Therefore, the first pilot configuration may also be referred to as a "recommended pilot configuration indication (recommended pilot configuration indication, RPCI)". For example, a pilot signal is a DMRS. In this case, the first pilot configuration may be referred to as a DMRS-RPCI.

In some implementations, the first pilot configuration may be one of a plurality of recommended pilot configurations. Accordingly, the second information may be used to indicate a plurality of recommended pilot configurations, so that the second device selects an appropriate pilot configuration. Certainly, in embodiments of this application, the second information may alternatively carry only one pilot configuration, namely, the first pilot configuration.

In some implementations, the first pilot configuration is determined based on full channel information of a channel, where the full channel information may be understood as all measured channel information. Therefore, the full channel information may also be referred to as "complete channel information". In embodiments of this application, the first pilot configuration is determined based on the full channel information, and the first pilot configuration is indicated to the second device by using the first information. Compared with a conventional scheme in which the second device determines a pilot configuration based on partial channel information, the method helps improve properness of the selected first pilot configuration, thereby increasing a degree of matching between the first pilot configuration and current channel characteristics, and further improving channel estimation performance.

In some implementations, the full channel information may be obtained based on a conventional pilot configuration manner. In other words, the second device may transmit a pilot configuration 1 to the first device. The pilot configuration 1 may be a default pilot configuration selected by the second device based on a current communication scenario. Alternatively, the pilot configuration 1 is selected by the second device based on the conventional pilot configuration scheme. Accordingly, the second device transmits a pilot signal to the first device based on the pilot configuration 1, so that the first device performs channel estimation based on the pilot signal to obtain full channel information.

In embodiments of this application, the second information is not specifically limited. In some implementations, the first pilot configuration indicated by the second information may be a pilot configuration specified in a known communication protocol. In this case, this type of pilot configuration may be referred to as an "RPCI type 1 (RPCI-type1)". For example, the pilot configuration of the RPCI type 1 may include the three RS configurations shown in Table 1.

In some other implementations, the first pilot configuration indicated by the second information may be obtained by adjusting a pilot configuration specified in a known communication protocol, and the adjusted pilot configuration may not belong to pilot configurations specified in the known communication protocol. In this case, this type of pilot configuration may be referred to as an "RPCI type 2 (RPCI-type2)". For example, the pilot configuration of the RPCI type 2 may be obtained by adjusting any one of the RS configurations shown in FIG. 5(a) to FIG. 5(f), and the adjusted pilot configuration may not belong to the pilot configuration corresponding to any one of the pilot patterns shown in FIG. 5(a) to FIG. 5(f).

In some other implementations, the first pilot configuration indicated by the second information may not belong to pilot configurations specified in a known communication protocol, and may instead be a completely new pilot configuration. In this case, this type of pilot configuration may be referred to as an "RPCI type 3 (RPCI-type3)".

In some implementations, the first pilot configuration may be obtained based on a first model. In other words, before step S710, the method further includes: inputting, by the first device, the full channel information into a first model for model inference, to obtain the first pilot configuration. The first model may be, for example, an AI model. For example, the first model may be the AI model shown in FIG. 6. Certainly, in embodiments of this application, the first model may alternatively be an ML model.

A manner in which the second device uses the first pilot configuration is not limited in embodiments of this application. In some implementations, the second device may directly use the first pilot configuration as a pilot configuration used for transmitting pilots between the first device and the second device. For example, the second device may transmit a pilot signal to the first device based on the first pilot configuration. In some other implementations, the second device may adjust the first pilot configuration, and transmit a pilot signal based on the adjusted pilot configuration.

In some scenarios, the first device cannot determine whether the first pilot configuration is used for subsequent transmission of pilot signals, which may result in that the pilot signals cannot be correctly received. Therefore, in some implementations, in response to receiving the first pilot configuration, the second device may transmit first indication information to the first device, to indicate whether to use the first pilot configuration. Certainly, in some other scenarios, the second device may transmit the adjusted pilot configuration to the first device by using the first indication information.

If the first indication information is used to indicate whether to use the first pilot configuration, an implementation of the first indication information is not limited in embodiments of this application. In some implementations, the first indication information may occupy one bit. If a value of this bit is a first value, it indicates agreement to transmit a pilot signal based on the first pilot configuration. If the value of this bit is a second value, it indicates disagreement to transmit a pilot signal based on the first pilot configuration. The first value is different from the second value. For example, the first value may be 0 and the second value may be 1. For another example, the first value may be 1, and the second value may be 0. Certainly, in embodiments of this application, the first indication information may occupy a plurality of bits.

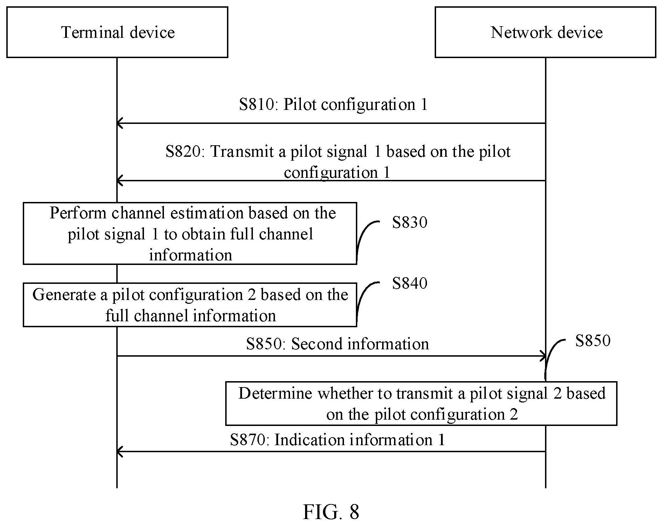

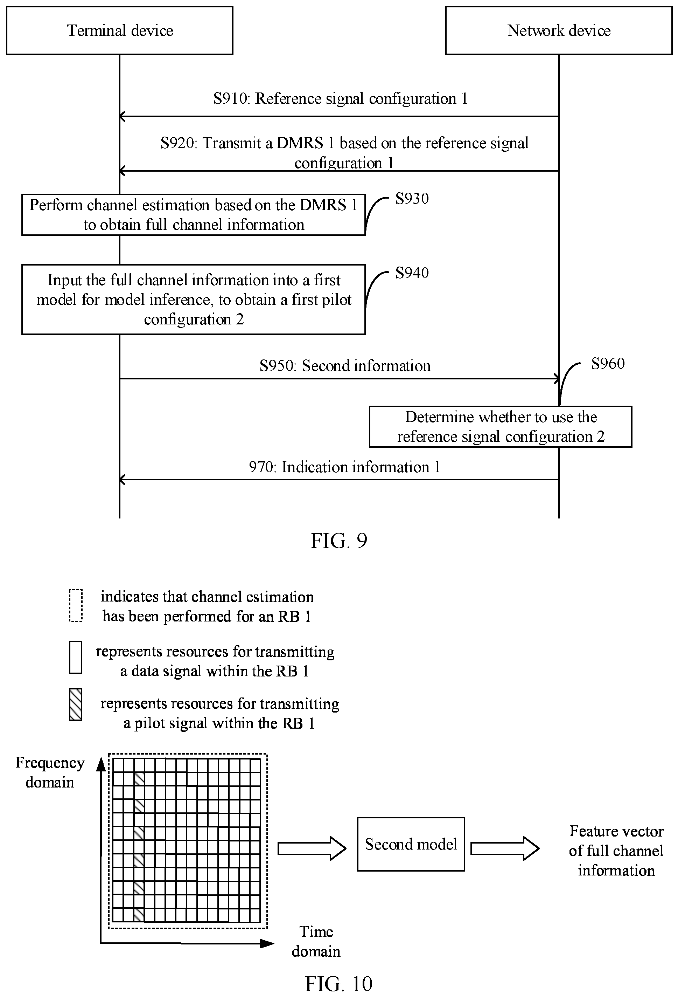

With reference to FIG. 8 and FIG. 9, the following describes a wireless communication method according to an embodiment of this application. FIG. 8 is a schematic flowchart of a wireless communication method according to another embodiment of this application. It is assumed that the first device is a terminal device, and the second device is a network device. The method shown in FIG. 8 includes step S810 to step S870.

In step S810, after a terminal device completes initial access, a network device transmits a pilot configuration 1 to the terminal device.

In some implementations, the pilot configuration 1 may be a default pilot configuration selected by the network device based on a current communication scenario. Alternatively, the pilot configuration 1 is selected by the network device based on the conventional pilot configuration scheme.

In step S820, the network device transmits a pilot signal 1 to the terminal device based on the pilot configuration 1.

In step S830, the terminal device performs channel estimation based on the pilot signal 1 to obtain full channel information.

In step S840, the terminal device generates a pilot configuration 2 based on the full channel information, where the pilot configuration 2 is a pilot configuration recommended by the terminal device.

In step S850, the terminal device transmits second information to the network device to indicate the pilot configuration 2.

In step S860, the network device determines whether to transmit a pilot signal 2 based on the pilot configuration 2.

In some implementations, if the network device determines to transmit the pilot signal 2 based on the pilot configuration 2, step S870 is performed.

In step S870, the network device transmits indication information 1 to the terminal device to indicate agreement to use the pilot configuration 2.

FIG. 9 is a schematic flowchart of a wireless communication method according to another embodiment of this application. It is assumed that the first device is a terminal device, the second device is a network device, and a pilot signal is a DMRS transmitted by using a PDSCH. The method shown in FIG. 9 includes step S910 to step 980.

In step S910, after a terminal device completes initial access, a network device transmits a reference signal configuration 1 to the terminal device.

In some implementations, the reference signal configuration 1 may be a default reference signal configuration selected by the network device based on a current communication scenario. Alternatively, the reference signal configuration 1 is selected by the network device based on a conventional reference signal configuration scheme.

In step S920, the network device transmits a DMRS 1 to the terminal device based on the reference signal configuration 1.

In step S930, the terminal device performs channel estimation based on the DMRS 1 to obtain full channel information.

In step S940, the terminal device inputs the full channel information into a first model for model inference to obtain a reference signal configuration 2, where the reference signal configuration 2 is a reference signal configuration recommended by the terminal device.

In some implementations, the reference signal configuration 2 recommended by the terminal device may be a reference signal configuration specified in a known communication protocol.

It is assumed that Table 2 lists reference signal configurations specified in a known communication protocol. As shown in Table 2, when a pilot pattern index (pilot pattern index) is 0, a corresponding mapping type is a type A, a corresponding DMRS type is a type 1, and a corresponding additional position is "pos 0". When a pilot pattern index is 1, a corresponding mapping type is a type B, a corresponding DMRS type is a type 1, and a corresponding additional position is "pos 1". When a pilot pattern index is 2, a corresponding mapping type is a type A, a corresponding DMRS type is a type 2, and a corresponding additional position is "pos 1". When a pilot pattern index is n, a corresponding mapping type is a type B, a corresponding DMRS type is a type 2, and a corresponding additional position is "pos 3". Accordingly, the reference signal configuration 2 may be one of the plurality of reference signal configurations shown in Table 2.

**Table 2**

| **Pilot pattern index** | **Mapping type** | **DMRS type** | **Additional position** |
|---|---|---|---|
| 0 | Type A | Type 1 | pos 0 |
| 1 | Type B | Type 1 | pos 0 |
| 2 | Type A | Type 2 | pos 1 |
| ... | ... | ... | ... |
| n | Type B | Type 2 | pos 3 |

In some implementations, the process of performing model inference by using the first model to obtain the reference signal configuration 2 may be considered as solving a classification problem of DMRS configurations by using the first model. Output of the first model is a pilot pattern index in the plurality of reference signal configurations shown in Table 2. Accordingly, the terminal device may determine, based on the pilot pattern index output by the first model, various parameters corresponding to the pilot configuration pattern.

In step S950, the terminal device transmits second information to the network device to indicate the reference signal configuration 2.

In some implementations, the second information may include a mapping type, a DMRS type, and an additional position. Accordingly, the second information "*PDSCH-DMRS-RPCI*" may be represented as the following code. The second information "*PDSCH-DMRS-RPCI*" may represent an RPCI of a DMRS transmitted by using a PDSCH.

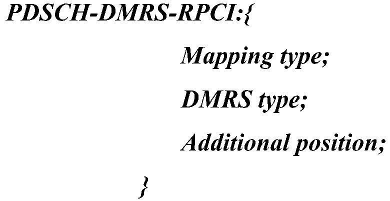

In step S960, the network device determines whether to use the reference signal configuration 2.

In some implementations, if the network device determines to use the reference signal configuration 2, step S970 is performed. If the network device determines not to use the reference signal configuration 2, the network device is required to transmit another used reference signal configuration to the terminal device.

In step S970, the network device transmits indication information 1 to the terminal device to indicate using the reference signal configuration 2.

For example, the first information includes the third information. In this case, the third information is used to indicate full channel information of a channel, and the full channel information of the channel is used to determine the first pilot configuration. In embodiments of this application, the first device may transmit the full channel information to the second device, so that the second device determines a pilot configuration, which helps improve properness of determining the pilot configuration.

As described above, the full channel information indicated by the third information may be used for determining the first pilot configuration. Therefore, the third information may also be understood as intermediate information used for determining the first pilot configuration. In this case, the third information may be referred to as an "RPCI type 4 (RPCI-type4)".

In some implementations, the third information includes one or more of the following: full channel information; or feature data of the full channel information. For example, the third information includes the full channel information. For related descriptions of the full channel information, reference may be made to the foregoing description. For brevity, details are not described herein again.

For example, the third information includes the feature data of the full channel information. In some implementations, the feature data of the full channel information is used to indicate time-frequency statistical characteristics of the channel. In some other implementations, the feature data of the full channel information is abstract features of the full channel information that are extracted based on a feature extraction function of the model. In embodiments of this application, since the full channel information may contain redundant data, carrying the feature data of the full channel information by using the third information helps reduce transmission overheads caused by transmitting the third information, compared with a scheme of directly transmitting the full channel information.

In some implementations, a data amount of the feature data of the full channel information is less than a data amount of the full channel information. For example, a feature dimension of the feature data of the full channel information is less than a feature dimension of the full channel information.

In some implementations, the feature data of the full channel information may be obtained based on a second model. In other words, the full channel information may be input into the second model for feature extraction, to obtain the feature data of the full channel information. The second model may be, for example, an AI model and/or an ML model. Certainly, in embodiments of this application, another scheme may alternatively be used for feature extraction, which is not limited in embodiments of this application. In addition, in some scenarios, the first model and the second model may be the same model. In some other scenarios, the first model and the second model may be two different models.

Referring to FIG. 10, it is assumed that the first device acquires full channel information corresponding to an RB 1. Thereafter, the first device may input the full channel information into the second model for feature extraction. Accordingly, the second model outputs a feature vector of the full channel information, that is, feature data of the full channel information, where a feature dimension of the feature vector is less than a feature dimension of the full channel information.

The third information in embodiments of this application is described above. In different application scenarios, a manner in which the third information is used may vary slightly. Therefore, a manner in which the third information is used is described below with reference to scenarios 1 and 2.

Scenario 1: The second device has a capability of generating the first pilot configuration based on the third information. Assuming that the first pilot configuration is obtained by using the first model, the second device having the capability may be understood as that the first model is deployed on the second device. In this case, the first model may be understood as a single-end model, where the single-end model refers to that the model is used on one communications device. Since the model is used solely on one communications device, it may be understood that the model is used only on the communications device at a single end.

In some implementations, after receiving the third information, the second device may generate the first pilot configuration based on the third information, and indicate the first pilot configuration to the first device by using second indication information. In other words, the foregoing method further includes: transmitting, by the second device, second indication information to the first device, where the second indication information is used to indicate the first pilot configuration.

In some implementations, the first pilot configuration is generated by inputting the third information into the first model, where the first model is deployed on the second device. In other words, the second device inputs the third information into the first model for model inference to obtain the first pilot configuration.

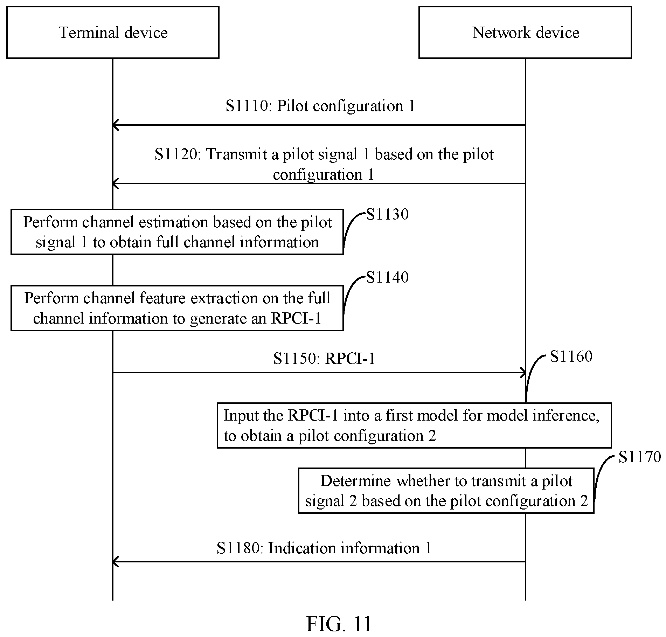

For ease of understanding, a schematic flowchart of a wireless communication method according to an embodiment of this application is described below with reference to FIG. 11 by using an example in which the first model is deployed on the second device. It is assumed that the first device is a terminal device, and the second device is a network device. The method shown in FIG. 11 includes step S1110 to step S1180.

In step S1110, after a terminal device completes initial access, a network device transmits a pilot configuration 1 to the terminal device.

In some implementations, the pilot configuration 1 may be a default pilot configuration selected by the network device based on a current communication scenario. Alternatively, the pilot configuration 1 is selected by the network device based on the conventional pilot configuration scheme.

In step S1120, the network device transmits a pilot signal 1 to the terminal device based on the pilot configuration 1.

In step S1130, the terminal device performs channel estimation based on the pilot signal 1 to obtain full channel information.

In step S1140, the terminal device performs channel feature extraction on the full channel information to generate an RPCI-1.

In some implementations, the terminal device performs channel feature extraction on the full channel information to obtain feature data of the full channel information, and generates an RPCI-1 based on the feature data of the full channel information. For the obtained feature data of the full channel information, reference may be made to the foregoing description provided with reference to FIG. 10. For brevity, details are not described herein again.

In some implementations, the type RPCI-1 may be the RPCI type 4 described above.

In step S1150, the terminal device transmits the RPCI-1 to the network device.

In step S1160, the network device inputs the RPCI-1 into the first model for model inference to obtain a pilot configuration 2.

In step S1170, the network device determines whether to transmit a pilot signal 2 based on the pilot configuration 2.

In some implementations, if the network device determines to transmit the pilot signal 2 based on the pilot configuration 2, step S1180 is performed.

In step S1180, the network device transmits indication information 1 to the terminal device to indicate the pilot configuration 2.

Scenario 2: Each of the first device and the second device has a capability of generating the first pilot configuration based on the third information. It is assumed that the first pilot configuration is obtained by using the first model, and that each of the first device and the second device having the capability may be understood as that the first model is deployed on each of the first device and the second device. In this case, the first model may be understood as a dual-end model, where the dual-end model refers to that the model is deployed on each of communications devices that communicate with each other, and the models in the communications devices that communicate with each other are required to cooperate with each other for use. This type of model is required to be deployed on each of communications devices at two ends that communicate with each other, and cooperate with each other for use.

In some implementations, the foregoing method further includes: transmitting, by the second device, third indication information to the first device, where the third indication information is used to indicate whether to agree to transmit a pilot signal based on the first pilot configuration.

An implementation of the third indication information is not limited in embodiments of this application. In some implementations, the third indication information may occupy one bit. If a value of this bit is a first value, it indicates agreement to transmit a pilot signal based on the first pilot configuration. If the value of this bit is a second value, it indicates disagreement to transmit a pilot signal based on the first pilot configuration. The first value is different from the second value. For example, the first value may be 0 and the second value may be 1. For another example, the first value may be 1, and the second value may be 0. Certainly, in embodiments of this application, the third indication information may occupy a plurality of bits.

In some implementations, in a case that the third indication information indicates agreement to transmit a pilot signal based on the first pilot configuration, the foregoing method further includes: determining, by the first device, the first pilot configuration based on the third information. In other words, the first device may directly generate the first pilot configuration based on the third information. Compared with a scheme of directly transmitting the first pilot configuration to the first device, the method helps reduce transmission resources required for transmitting the first pilot configuration.

In some implementations, the determining, by the first device, the first pilot configuration based on the third information may include: inputting, by the first device, the third information into a first model for model inference, to obtain the first pilot configuration.

In some other implementations, in a case that the third indication information indicates disagreement to transmit a pilot signal based on the first pilot configuration, the second device may indicate a new pilot configuration to the first device, for subsequent transmission of pilot signals. Certainly, in embodiments of this application, in the foregoing case, the second device may not indicate a new pilot configuration to the first device.

As described above, the first model may be deployed on the first device and the second device. In embodiments of this application, a training process of the first model is not limited. In some implementations, the first model may be trained by the first device. Correspondingly, the first device may deploy the first model for the second device by using fourth information. In other words, the foregoing method further includes: transmitting, by the first device, fourth information to the second device, where the fourth information is used for deploying the first model on the second device.

In some implementations, the fourth information may include one or more of the following information: model structure information of the first model; or model parameter information of the first model. Certainly, in embodiments of this application, the fourth information is not limited. For example, the fourth information may further include a model identifier of the first model.

In some other implementations, the first model may be trained by the second device. Correspondingly, the second device may deploy the first model for the first device by using fifth information. In other words, the foregoing method further includes: transmitting, by the second device, fifth information to the first device, where the fifth information is used for deploying the first model on the first device.

In some implementations, the fifth information may include one or more of the following information: model structure information of the first model; or model parameter information of the first model. Certainly, in embodiments of this application, the fourth information is not limited. For example, the fifth information may further include a model identifier of the first model.

Certainly, in embodiments of this application, the first model may alternatively be trained by a device other than the first device and the second device, and after completion of the training, the trained first model is deployed on the first device and the second device.

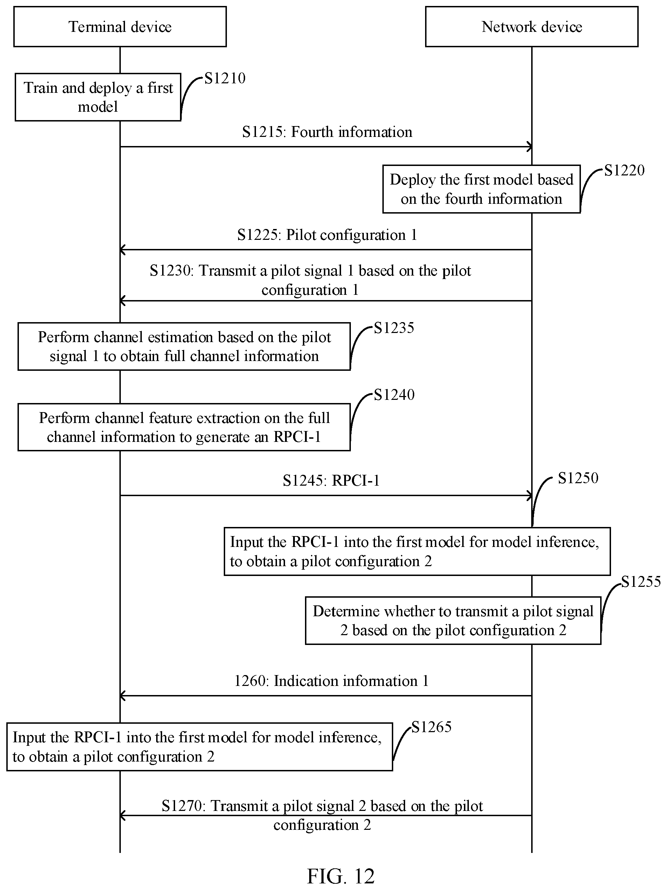

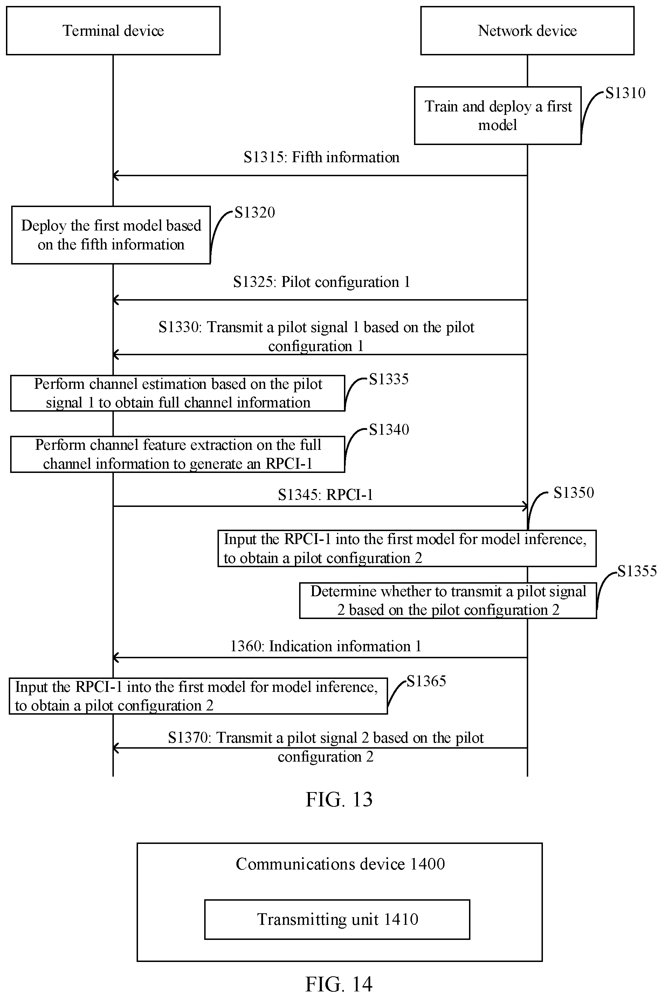

For ease of understanding, a wireless communication method according to an embodiment of this application is described below with reference to FIG. 12 and FIG. 13. The first device may be a terminal device, and the second device may be a network device.

FIG. 12 is a schematic flowchart of a wireless communication method according to another embodiment of this application. It is assumed that the first model is trained by the terminal device. In this case, the method shown in FIG. 12 includes step S1210 to step S1270.

In step S1210, the terminal device trains and deploys the first model.

In step S1215, the terminal device transmits fourth information to a network device, so as to deploy the first model for the network device.

In some implementations, to ensure that the network device and the terminal device obtain a same pilot configuration, the first models deployed respectively on the network device and the terminal device are required to be identical. Therefore, the terminal device may deploy the first model for the network device by using the fourth information.

In step S1220, the first model is deployed on the network device based on the fourth information.

In step S1225, after the terminal device completes initial access, the network device transmits a pilot configuration 1 to the terminal device.

In some implementations, the pilot configuration 1 may be a default pilot configuration selected by the network device based on a current communication scenario. Alternatively, the pilot configuration 1 is selected by the network device based on the conventional pilot configuration scheme.

In step S1230, the network device transmits a pilot signal 1 to the terminal device based on the pilot configuration 1.

In step S1235, the terminal device performs channel estimation based on the pilot signal 1 to obtain full channel information.

In step S1240, the terminal device performs channel feature extraction on the full channel information to generate an RPCI-1.

In some implementations, the terminal device performs channel feature extraction on the full channel information to obtain feature data of the full channel information, and generates an RPCI-1 based on the feature data of the full channel information. For the obtained feature data of the full channel information, reference may be made to the foregoing description provided with reference to FIG. 10. For brevity, details are not described herein again.

In some implementations, the type RPCI-1 may be the RPCI type 4 described above.

In step S1245, the terminal device transmits the RPCI-1 to the network device.

In step S1250, the network device inputs the RPCI-1 into the first model for model inference to obtain a pilot configuration 2.

In step S1255, the network device determines whether to transmit a pilot signal 2 based on the pilot configuration 2.

In some implementations, if the network device determines to transmit the pilot signal 2 based on the pilot configuration 2, step S1260 is performed.

In step S1260, the network device transmits indication information 1 to the terminal device to indicate agreement to transmit a pilot signal based on the pilot configuration 2.

In some implementations, the indication information 1 may only indicate agreement to use the pilot configuration 2, without indicating specific pilot configuration 2 through the indication information 1, which helps reduce transmission resources for transmitting the indication information 1.

In step S1265, the terminal device inputs the RPCI-1 into the first model for model inference, to obtain the pilot configuration 2.

In step S1270, the network device transmits a pilot signal 2 to the terminal device based on the pilot configuration 2.

FIG. 13 is a schematic flowchart of a wireless communication method according to another embodiment of this application. It is assumed that the first model is trained by the network device. In this case, the method shown in FIG. 13 includes step S1310 to step S1370.

In step S1310, the network device trains and deploys the first model.

In step S1315, the network device transmits fifth information to the terminal device, so as to deploy the first model for the terminal device.

In some implementations, to ensure that the network device and the terminal device obtain a same pilot configuration, the first models deployed respectively on the network device and the terminal device are required to be identical. Therefore, the network device may deploy the first model for the terminal device by using the fifth information.

In step S1320, the first model is deployed on the terminal device based on the fifth information.

In step S1325, after the terminal device completes initial access, the network device transmits a pilot configuration 1 to the terminal device.

In some implementations, the pilot configuration 1 may be a default pilot configuration selected by the network device based on a current communication scenario. Alternatively, the pilot configuration 1 is selected by the network device based on the conventional pilot configuration scheme.

In step S1330, the network device transmits a pilot signal 1 to the terminal device based on the pilot configuration 1.

In step S1335, the terminal device performs channel estimation based on the pilot signal 1 to obtain full channel information.

In step S1340, the terminal device performs channel feature extraction on the full channel information to generate an RPCI-1.

In some implementations, the terminal device performs channel feature extraction on the full channel information to obtain feature data of the full channel information, and generates an RPCI-1 based on the feature data of the full channel information. For the obtained feature data of the full channel information, reference may be made to the foregoing description provided with reference to FIG. 10. For brevity, details are not described herein again.

In some implementations, the type RPCI-1 may be the RPCI type 4 described above.

In step S1345, the terminal device transmits the RPCI-1 to the network device.

In step S1350, the network device inputs the RPCI-1 into the first model for model inference to obtain a pilot configuration 2.

In step S1355, the network device determines whether to transmit a pilot signal 2 based on the pilot configuration 2.

In some implementations, if the network device determines to transmit the pilot signal 2 based on the pilot configuration 2, step S1360 is performed.

In step S1360, the network device transmits indication information 1 to the terminal device to indicate agreement to transmit a pilot signal based on the pilot configuration 2.

In some implementations, the indication information 1 may only indicate agreement to use the pilot configuration 2, without indicating specific pilot configuration 2 through the indication information 1, which helps reduce transmission resources for transmitting the indication information 1.

In step S1365, the terminal device inputs the RPCI-1 into the first model for model inference, to obtain the pilot configuration 2.

In step S1370, the network device transmits a pilot signal 2 to the terminal device based on the pilot configuration 2.

In embodiments of this application, the first pilot configuration may be for a pilot signal transmitted on a channel. For example, the pilot signal is a DMRS. In this case, the first pilot configuration may represent a pilot configuration corresponding to a DMRS transmitted by using a PDCCH, or the first pilot configuration may represent a pilot configuration corresponding to a DMRS transmitted by using a PDSCH.

In embodiments of this application, the foregoing manner of determining the first pilot configuration may be applicable to various channels over which pilot signals are transmitted. For example, the pilot signal is a DMRS. In this case, the first pilot configuration may represent a pilot configuration corresponding to a DMRS transmitted by using a PDCCH, and in this case, the first pilot configuration may be denoted as "PDCCH-DMRS-RPCI". Alternatively, the first pilot configuration may represent a pilot configuration corresponding to a DMRS transmitted by using a PDSCH, and in this case, the first pilot configuration may be denoted as "PDSCH-DMRS-RPCI". Alternatively, the first pilot configuration may represent a pilot configuration corresponding to a DMRS transmitted by using a PBCH, and in this case, the first pilot configuration may be denoted as "PBCH-DMRS-RPCI".

In embodiments of this application, the first model may be an AI model. For example, the first model may be the AI model shown in FIG. 2 and FIG. 3. For another example, the first model may alternatively be another AI model. Certainly, the first model may alternatively be an ML model, which is not limited in embodiments of this application.

In embodiments of this application, any one of the foregoing information may be carried by using one or more of the following message types: a radio resource control (radio resource control, RRC) message, a medium access control control element (media access control control element, MAC CE), downlink control information (downlink control information, DCI), uplink control information (uplink control information, UCI), a physical uplink control channel (physical uplink control channel, PUCCH), or a physical uplink shared channel (physical uplink shared channel, PUSCH).

In embodiments of this application, any one of the foregoing information may be carried by using one or more of a unicast message, a multicast message, or a broadcast message.

The foregoing unicast message may be understood as information transmitted in a one-to-one manner, that is, a message transmitted from one transmitting end to one receiving end. In this case, an information source transmits a unicast message by using a unicast channel, only a terminal device or network device that has been allocated a corresponding unicast resource may attempt to receive the unicast message, and the unicast message may also be referred to as dedicated signalling.

The foregoing multicast message may be understood as information transmitted in a one-to-many manner, that is, a message transmitted from one transmitting end to a plurality of receiving ends. In this case, an information source transmits a multicast message by using a multicast channel, a terminal device or a network device that is within multicast signal coverage and is a group member may attempt to receive the multicast message, and the terminal device or the network device acquires a multicast channel-related resource when joining a group.

The foregoing broadcast message may be understood as information transmitted in a one-to-any manner, that is, a message transmitted from one transmitting end to any receiving end. In this case, an information source transmits a broadcast message by using a broadcast channel, and any terminal device or network device within broadcast signal coverage may attempt to receive the broadcast message.

The method embodiments of this application are described above in detail with reference to FIG. 1 to FIG. 13. Apparatus embodiments of this application are described below in detail with reference to FIG. 14 to FIG. 16. It should be understood that the descriptions of the method embodiments correspond to descriptions of the apparatus embodiments, and therefore, for parts that are not described in detail, reference may be made to the foregoing method embodiments.

FIG. 14 is a schematic diagram of a communications device according to an embodiment of this application. The communications device 1400 shown in FIG. 14 is a first device and the communications device 1400 includes a transmitting unit 1410.

The transmitting unit 1410 is configured to transmit first information to a second device, where the first information includes one or more of the following: second information, where the second information is used to indicate a recommended first pilot configuration; or third information, where the third information is used to indicate full channel information of a channel, and the full channel information of the channel is used to determine the first pilot configuration.

In some implementations, in a case that the first information includes the second information, the first pilot configuration is determined based on the full channel information of the channel.

In some implementations, in a case that the first information includes the second information, the communications device further includes: a first processing unit, configured to input the full channel information into a first model for model inference, to obtain the first pilot configuration.

In some implementations, in a case that the first information includes the second information, the communications device further includes: a first receiving unit, configured to receive first indication information transmitted by the second device, where the first indication information is used to indicate whether to use the first pilot configuration; and/or the first indication information is used to indicate a second pilot configuration, where the second pilot configuration is determined based on the first pilot configuration.

In some implementations, in a case that the first information includes the third information, the third information includes one or more of the following: the full channel information; or feature data of the full channel information.

In some implementations, the communications device further includes: a second receiving unit, configured to receive second indication information transmitted by the second device, where the second indication information is used to indicate the first pilot configuration.

In some implementations, the first pilot configuration is generated by inputting the third information into the first model.

In some implementations, the first model is deployed on the second device.

In some implementations, the communications device further includes: a third receiving unit, configured to receive third indication information transmitted by the second device, where the third indication information is used to indicate whether to agree to transmit a pilot signal based on the first pilot configuration.

In some implementations, in a case that the third indication information indicates agreement to transmit a pilot signal based on the first pilot configuration, the communications device further includes: a second processing unit, configured to determine the first pilot configuration based on the third information.

In some implementations, the second processing unit is configured to input the third information into a first model for model inference, to obtain the first pilot configuration.

In some implementations, the first model is deployed on the first device and the second device.

In some implementations, the transmitting unit is further configured to transmit fourth information to the second device, where the fourth information is used to deploy the first model on the second device; or a fourth receiving unit is configured to receive fifth information transmitted by the second device, where the fifth information is used to deploy the first model on the first device.

In some implementations, the first device is a device that receives a pilot signal transmitted based on the first pilot configuration, and the second device is a device that transmits the pilot signal.

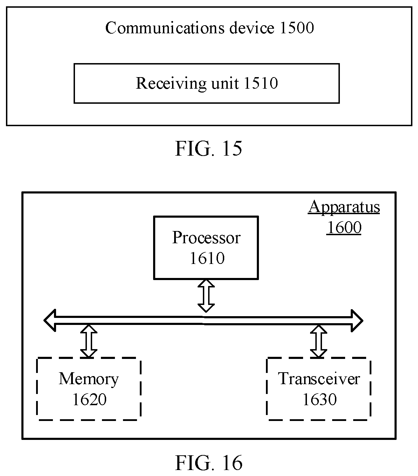

FIG. 15 is a schematic diagram of a communications device according to another embodiment of this application. The communications device 1500 shown in FIG. 15 is a second device and the communications device 1500 includes a receiving unit 1510.

The receiving unit 1510 is configured to receive first information transmitted by a first device, where the first information includes one or more of the following: second information, where the second information is used to indicate a recommended first pilot configuration; or third information, where the third information is used to indicate full channel information of a channel, and the full channel information of the channel is used to determine the first pilot configuration.

In some implementations, in a case that the first information includes the second information, the first pilot configuration is determined based on the full channel information of the channel.

In some implementations, in a case that the first information includes the second information, the first pilot configuration is obtained by inputting the full channel information into a first model for model inference.

In some implementations, in a case that the first information includes the second information, the communications device further includes: a first transmitting unit, configured to transmit first indication information to the first device, where the first indication information is used to indicate whether to use the first pilot configuration; and/or the first indication information is used to indicate a second pilot configuration, where the second pilot configuration is determined based on the first pilot configuration.

In some implementations, in a case that the first information includes the third information, the third information includes one or more of the following: the full channel information; or feature data of the full channel information.

In some implementations, the communications device further includes: a second transmitting unit, configured to transmit second indication information to the first device, where the second indication information is used to indicate the first pilot configuration.

In some implementations, the communications device further includes: a processing unit, configured to input the third information into a first model for model inference, to obtain the first pilot configuration.

In some implementations, the communications device further includes: a third transmitting unit, configured to transmit third indication information to the first device, where the third indication information is used to indicate whether to agree to transmit a pilot signal based on the first pilot configuration.

In some implementations, the first model is deployed on the first device and the second device.

In some implementations, the receiving unit is further configured to receive fourth information transmitted by the first device, where the fourth information is used to deploy the first model on the second device; or a fourth transmitting unit is further configured to transmit fifth information to the first device, where the fifth information is used to deploy the first model on the first device.

In some implementations, the first device is a device that receives a pilot signal transmitted based on the first pilot configuration, and the second device is a device that transmits the pilot signal.

In an optional embodiment, the transmitting unit 1410 may be a transceiver 1630. The communications device 1400 may further include a processor 1610 and a memory 1620, which are specifically shown in FIG. 16.

In an optional embodiment, the transmitting unit 1510 may be a transceiver 1630. The communications device 1500 may further include a processor 1610 and a memory 1620, which are specifically shown in FIG. 16.

FIG. 16 is a schematic structural diagram of a communications apparatus according to an embodiment of this application. Dashed lines in FIG. 16 indicate that a unit or module is optional. The apparatus 1600 may be configured to implement the methods described in the foregoing method embodiments. The apparatus 1600 may be a chip, a terminal device, or a network device.

The apparatus 1600 may include one or more processors 1610. The processor 1610 may support the apparatus 1600 in implementing the methods described in the foregoing method embodiments. The processor 1610 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1600 may further include one or more memories 1620. The memory 1620 stores a program, and the program may be executed by the processor 1610, so that the processor 1610 executes the method described in the foregoing method embodiment. The memory 1620 may be independent of the processor 1610 or may be integrated into the processor 1610.

The apparatus 1600 may further include a transceiver 1630. The processor 1610 may communicate with another device or chip by using the transceiver 1630. For example, the processor 1610 may transmit data to and receive data from another device or chip through the transceiver 1630.

An embodiment of this application further provides a computer-readable storage medium for storing a program. The computer-readable storage medium may be applied to a terminal or a network device provided in embodiments of this application, and the program causes a computer to execute the methods executed by the terminal or the network device in various embodiments of this application.

An embodiment of this application further provides a computer program product. The computer program product includes a program. The computer program product may be applied to a terminal or a network device provided in embodiments of this application, and the program causes a computer to execute the methods executed by the terminal or the network device in various embodiments of this application.

An embodiment of this application further provides a computer program. The computer program may be applied to a terminal or a network device provided in embodiments of this application, and the computer program causes a computer to execute the methods executed by the terminal or the network device in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and accompanying drawings of this application are used for distinguishing different objects from each other, rather than defining a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by pre-storing corresponding code, tables, or other forms that can be used to indicate related information in devices (for example, including a terminal device and a network device), and a specific implementation thereof is not limited in this application. For example, being predefined may refer to being defined in a protocol.

In embodiments of this application, the "protocol" may indicate a standard protocol in the communications field, which may include, for example, an LTE protocol, an NR protocol, and a related protocol applied to a future communications system. This is not limited in this application.

In embodiments of this application, the term "and/or" describes merely an association relationship between associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution orders. The execution orders of the processes should be determined based on functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
transmitting, by a first device, first information to a second device, wherein the first information comprises one or more of following:
second information, wherein the second information is used to indicate a recommended first pilot configuration; or
third information, wherein the third information is used to indicate full channel information of a channel, and the full channel information of the channel is used to determine the first pilot configuration.

2. The method according to claim 1, wherein in a case that the first information comprises the second information, the first pilot configuration is determined based on the full channel information of the channel.

3. The method according to claim 1 or 2, wherein in a case that the first information comprises the second information, before the transmitting, by the first device, the first information to the second device, the method further comprises:
inputting, by the first device, the full channel information into a first model for model inference, to obtain the first pilot configuration.

4. The method according to any one of claims 1 to 3, wherein in a case that the first information comprises the second information, the method further comprises:
receiving, by the first device, first indication information transmitted by the second device, wherein the first indication information is used to indicate whether to use the first pilot configuration; and/or
the first indication information is used to indicate a second pilot configuration, wherein the second pilot configuration is determined based on the first pilot configuration.

5. The method according to claim 1, wherein in a case that the first information comprises the third information, the third information comprises one or more of following:
the full channel information; or
feature data of the full channel information.

6. The method according to claim 5, wherein the method further comprises:
receiving, by the first device, second indication information transmitted by the second device, wherein the second indication information is used to indicate the first pilot configuration.

7. The method according to claim 6, wherein the first pilot configuration is generated by inputting the third information into the first model.

8. The method according to claim 7, wherein the first model is deployed on the second device.

9. The method according to claim 5, wherein the method further comprises:
receiving, by the first device, third indication information transmitted by the second device, wherein the third indication information is used to indicate whether to agree to transmit a pilot signal based on the first pilot configuration.

10. The method according to claim 9, wherein in a case that the third indication information indicates agreement to transmit a pilot signal based on the first pilot configuration, the method further comprises:
determining, by the first device, the first pilot configuration based on the third information.

11. The method according to claim 10, wherein the determining, by the first device, the first pilot configuration based on the third information comprises:
inputting, by the first device, the third information into a first model for model inference, to obtain the first pilot configuration.

12. The method according to any one of claims 9 to 11, wherein the first model is deployed on the first device and the second device.

13. The method according to claim 11 or 12, wherein the method further comprises:
transmitting, by the first device, fourth information to the second device, wherein the fourth information is used to deploy the first model on the second device; or
receiving, by the first device, fifth information transmitted by the second device, wherein the fifth information is used to deploy the first model on the first device.

14. The method according to any one of claims 1 to 13, wherein the first device is a device that receives a pilot signal transmitted based on the first pilot configuration, and the second device is a device that transmits the pilot signal.

15. A wireless communication method, comprising:
receiving, by a second device, first information transmitted by a first device, wherein the first information comprises one or more of following:
second information, wherein the second information is used to indicate a recommended first pilot configuration; or
third information, wherein the third information is used to indicate full channel information of a channel, and the full channel information of the channel is used to determine the first pilot configuration.

16. The method according to claim 15, wherein in a case that the first information comprises the second information, the first pilot configuration is determined based on the full channel information of the channel.

17. The method according to claim 15 or 16, wherein in a case that the first information comprises the second information, the first pilot configuration is obtained by inputting the full channel information into a first model for model inference.

18. The method according to any one of claims 15 to 17, wherein in a case that the first information comprises the second information, the method further comprises:
transmitting, by the second device, first indication information to the first device, wherein the first indication information is used to indicate whether to use the first pilot configuration; and/or
the first indication information is used to indicate a second pilot configuration, wherein the second pilot configuration is determined based on the first pilot configuration.

19. The method according to claim 15, wherein in a case that the first information comprises the third information, the third information comprises one or more of following:
the full channel information; or
feature data of the full channel information.

20. The method according to claim 19, wherein the method further comprises:
transmitting, by the second device, second indication information to the first device, wherein the second indication information is used to indicate the first pilot configuration.

21. The method according to claim 20, wherein before the transmitting, by the second device, the second indication information to the first device, the method further comprises:
inputting, by the second device, the third information into a first model for model inference, to obtain the first pilot configuration.

22. The method according to claim 19, wherein the method further comprises:
transmitting, by the second device, third indication information to the first device, wherein the third indication information is used to indicate whether to agree to transmit a pilot signal based on the first pilot configuration.

23. The method according to claim 22, wherein the first model is deployed on the first device and the second device.

24. The method according to claim 23, wherein the method further comprises:
receiving, by the second device, fourth information transmitted by the first device, wherein the fourth information is used to deploy the first model on the second device; or
transmitting, by the second device, fifth information to the first device, wherein the fifth information is used to deploy the first model on the first device.

25. The method according to any one of claims 15 to 24, wherein the first device is a device that receives a pilot signal transmitted based on the first pilot configuration, and the second device is a device that transmits the pilot signal.

26. A communications device, wherein the communications device is a first device and comprises:
a transmitting unit, configured to transmit first information to a second device, wherein the first information comprises one or more of following:
second information, wherein the second information is used to indicate a recommended first pilot configuration; or
third information, wherein the third information is used to indicate full channel information of a channel, and the full channel information of the channel is used to determine the first pilot configuration.

27. The communications device according to claim 26, wherein in a case that the first information comprises the second information, the first pilot configuration is determined based on the full channel information of the channel.

28. The communications device according to claim 26 or 27, wherein in a case that the first information comprises the second information, the communications device further comprises:
a first processing unit, configured to input the full channel information into a first model for model inference, to obtain the first pilot configuration.

29. The communications device according to any one of claims 26 to 28, wherein in a case that the first information comprises the second information, the communications device further comprises:
a first receiving unit, configured to receive first indication information transmitted by the second device, wherein the first indication information is used to indicate whether to use the first pilot configuration; and/or
the first indication information is used to indicate a second pilot configuration, wherein the second pilot configuration is determined based on the first pilot configuration.

30. The communications device according to claim 26, wherein in a case that the first information comprises the third information, the third information comprises one or more of following:
the full channel information; or
feature data of the full channel information.

31. The communications device according to claim 30, wherein the communications device further comprises:
a second receiving unit, configured to receive second indication information transmitted by the second device, wherein the second indication information is used to indicate the first pilot configuration.

32. The communications device according to claim 31, wherein the first pilot configuration is generated by inputting the third information into the first model.

33. The communications device according to claim 32, wherein the first model is deployed on the second device.

34. The communications device according to claim 30, wherein the communications device further comprises:
a third receiving unit, configured to receive third indication information transmitted by the second device, wherein the third indication information is used to indicate whether to agree to transmit a pilot signal based on the first pilot configuration.

35. The communications device according to claim 34, wherein in a case that the third indication information indicates agreement to transmit a pilot signal based on the first pilot configuration, the communications device further comprises:
a second processing unit, configured to determine the first pilot configuration based on the third information.

36. The communications device according to claim 35, wherein the second processing unit is configured to:
input the third information into a first model for model inference, to obtain the first pilot configuration.

37. The communications device according to any one of claims 34 to 36, wherein the first model is deployed on the first device and the second device.

38. The communications device according to claim 36 or 37, wherein the transmitting unit is further configured to:
transmit fourth information to the second device, wherein the fourth information is used to deploy the first model on the second device; or
a fourth receiving unit is configured to receive fifth information transmitted by the second device, wherein the fifth information is used to deploy the first model on the first device.

39. The communications device according to any one of claims 26 to 38, wherein the first device is a device that receives a pilot signal transmitted based on the first pilot configuration, and the second device is a device that transmits the pilot signal.

40. A communications device, wherein the communications device is a second device and comprises:
a receiving unit, configured to receive first information transmitted by a first device, wherein the first information comprises one or more of following:
second information, wherein the second information is used to indicate a recommended first pilot configuration; or
third information, wherein the third information is used to indicate full channel information of a channel, and the full channel information of the channel is used to determine the first pilot configuration.

41. The communications device according to claim 40, wherein in a case that the first information comprises the second information, the first pilot configuration is determined based on the full channel information of the channel.

42. The communications device according to claim 40 or 41, wherein in a case that the first information comprises the second information, the first pilot configuration is obtained by inputting the full channel information into a first model for model inference.

43. The communications device according to any one of claims 40 to 42, wherein in a case that the first information comprises the second information, the communications device further comprises:
a first transmitting unit, configured to transmit first indication information to the first device, wherein the first indication information is used to indicate whether to use the first pilot configuration; and/or
the first indication information is used to indicate a second pilot configuration, wherein the second pilot configuration is determined based on the first pilot configuration.

44. The communications device according to claim 40, wherein in a case that the first information comprises the third information, the third information comprises one or more of following:
the full channel information; or
feature data of the full channel information.

45. The communications device according to claim 44, wherein the communications device further comprises:
a second transmitting unit, configured to transmit second indication information to the first device, wherein the second indication information is used to indicate the first pilot configuration.

46. The communications device according to claim 45, wherein the communications device further comprises:
a processing unit, configured to input the third information into a first model for model inference, to obtain the first pilot configuration.

47. The communications device according to claim 44, wherein the communications device further comprises:
a third transmitting unit, configured to transmit third indication information to the first device, wherein the third indication information is used to indicate whether to agree to transmit a pilot signal based on the first pilot configuration.

48. The communications device according to claim 47, wherein the first model is deployed on the first device and the second device.

49. The communications device according to claim 48, wherein the receiving unit is further configured to receive fourth information transmitted by the first device, wherein the fourth information is used to deploy the first model on the second device; or
a fourth transmitting unit is further configured to transmit fifth information to the first device, wherein the fifth information is used to deploy the first model on the first device.

50. The communications device according to any one of claims 40 to 49, wherein the first device is a device that receives a pilot signal transmitted based on the first pilot configuration, and the second device is a device that transmits the pilot signal.

51. A communications device, comprising a transceiver, a memory, and a processor, wherein the memory is configured to store a program, and the processor is configured to invoke the program in the memory, and control the transceiver to receive or transmit a signal, to cause the communications device to execute the method according to any one of claims 1 to 25.

52. An apparatus, comprising a processor configured to invoke a program from a memory, to cause the apparatus to execute the method according to any one of claims 1 to 25.

53. A chip, comprising a processor, configured to invoke a program from a memory to cause a device installed with the chip to execute the method according to any one of claims 1 to 25.

54. A computer-readable storage medium, wherein the computer-readable storage medium stores a program, and the program causes a computer to execute the method according to any one of claims 1 to 25.

55. A computer program product, comprising a program that causes a computer to execute the method according to any one of claims 1 to 25.

56. A computer program, wherein the computer program causes a computer to execute the method according to any one of claims 1 to 25.
